# EUROPÄISCHE PATENTSCHRIFT

(11) **EP 0 794 315 B1**
(45) Veröffentlichungstag und Bekanntmachung des Hinweises auf die Patenterteilung: **02.07.2003**
(21) Anmeldenummer: 97102510.1
(22) Anmeldetag: 17.02.1997
(51) Int. Cl.: E21B 19/08, E21B 17/046, E21B 7/04, F16D 1/02

(54) **Vorrichtung zum Bohren im Erdreich**
Device for drilling in soil
Dispositif pour forer dans le sol

(30) Priorität: 08.03.1996 DE 19608980
(43) Veröffentlichungstag der Anmeldung: 10.09.1997
(73) Patentinhaber: Tracto-Technik Paul Schmidt Spezialmaschinen, 57368 Lennestadt (DE)
(72) Erfinder: Püttmann, Franz-Josef, 57368 Lennestadt (DE)
(74) Vertreter: König, Reimar, Dr.-Ing.

(56) Entgegenhaltungen:
- EP-A- 0 526 743
- BE-A- 527 075
- DE-C- 166 028
- DE-C- 317 300
- DE-C- 474 493
- DE-C- 717 535
- FR-A- 819 203
- US-A- 2 964 296
- US-A- 4 062 412

## Beschreibung

Die Erfindung betrifft eine Vorrichtung zum Bohren im Erdreich, insbesondere zum Herstellen oder Aufweiten von Erdbohrungen und/oder zum Zertrümmern alter Rohrleitungen sowie zum Verlegen neuer Rohrleitungen aus einer Schub-Zug-Einheit und einem damit in Antriebsverbindung stehenden, durch die Erdbohrung oder die Rohrleitung geführten Gestänge.

Das Herstellen oder Aufweiten von Erdbohrungen und/oder das Zertrümmern alter Rohrleitungen sowie das Verlegen neuer Rohrleitungen kann mittels den Vortrieb dynamisch erzeugenden Rammbohrgeräten oder mittels Pressen oder Winden, die einen statischen Druck erzeugen und das Gestänge vorwärts treiben oder ziehen, bewirkt werden. Mit dynamisch wirkenden Rammbohrgeräten ist der Nachteil verbunden, daß sie beim Arbeiten laute Geräusche erzeugen, durch die Vibrationen Schäden in der Umgebung, insbesondere an parallel liegenden oder kreuzenden Fremdleitungen verursachen können und ölhaltige, die Umwelt schädigende Abluft abgeben.

Die statisch wirkenden Pressen und Winden sind umständlich zu handhaben und lassen sich entweder nur schiebend mit einem schubsteifen Gestänge oder ziehend unter Verwendung von Seilen einsetzen.

Das schubsteife Gestänge muß, da die Schubvorrichtung in der Regel von einer Grube oder einem Schacht aus arbeitet, aus einzelnen kurzen Gestängeteilen bestehen. Nach und nach, wenn jeweils eine dem Durchmesser der Grube bzw. des Schachts entsprechende Gestängeteillänge in den Boden oder die Altrohrleitung eingepreßt ist, muß das Gestänge durch ein Teilstück verlängert werden. Da die Kanalschächte in der Regel einen Innendurchmesser von 1 m besitzen, können die Einzelgestängelängen häufig nicht länger als 80 cm sein.

Werden Seilwinden zum Durchziehen einer Aufweitvorrichtung mittels eines Seils durch eine vorhandene Erdbohrung verwendet, muß das Seil zunächst durch diese Erdbohrung oder eine vorhandene Rohrleitung hindurch geschoben werden, was mit den biegeweichen Seilen auf Schwierigkeiten stößt.

Um ein Gestänge mittels einer Schubvorrichtung in das Erdreich zu pressen, muß die Vorrichtung direkt an dem Gestänge angreifen, wofür an der Außenfläche des Gestänges angreifende Klemmbacken verwendet werden.

Da der Kraftangriff mittels der Klemmbacken kraftschlüssig erfolgt, ist angesichts der glatten Oberfläche des Gestänges ein Durchrutschen bei erhöhtem Bodenwiderstand unvermeidbar, was zu Verschleiß und daraus folgend noch stärkerem Durchrutschen führt.

Wenn das Gestänge zu deren Zertrümmern durch eine solche alte Rohrleitung gezogen oder geschoben wird, sorgt Schmutz, der sich auf dem Gestänge absetzt, zusätzlich für erhöhten Abrieb an den Klemmbacken und am Gestänge, was ein Durchrutschen erleichtert.

Die bisherigen Gestänge weisen Gewindeverbindungen auf, die äußerst schmutzempfindlich sind. Das gilt auch für grobe Gewinde, die zudem mit dem Nachteil behaftet sind, daß sie bei höheren Zugbelastungen und kleinen Biegeradien zum Brechen neigen. Ein weiterer Nachteil von Gewindeverbindungen besteht darin, daß etwa alle 80 cm ein Gestangestück ab- oder angeschraubt werden muß; das erfordert selbst bei hohen Gewindesteigungen ein mindestens sieben- bis zehnmaliges Drehen. Bei Gestangelängen von 100 m sind etwa 125 einzelne Gestängestücke mit einem entsprechenden Zeitaufwand für das Verschrauben erforderlich.

Ein Gestänge mit Gewindeverbindungen ist in der US-Patentschrift 2 964 296 beschrieben. Darüber hinaus ist aus der europaischen Offenlegungsschrift 0 526 743 eine Vorrichtung zum Eintreiben von Rohren bekannt, bei der das einzutreibende Rohr einen abstehenden Flansch mit Ausnehmungen aufweist, in die Zähne eines angetriebenen Zahnrades eingreifen. Mit einem ähnlichen Zahnradantrieb arbeitet eine in der französischen Patentschrift 819 203 beschriebene Bohrvorrichtung, die jedoch ebenfalls ein Gestange aus mit einer Gewindeverbindung versehenen Abschnitten verwendet Hingegen besitzt eine aus der deutschen Patentschrift 166 028 bekannte Bohrvorrichtung eine mit einem Außengewinde versehene Bohrspindel, die mit Hilte einer in einem Gehäuse angeordneten Vorschubmutter aus zwei Hälften vorwartsbewegt wird.

Eine aus der französischen Patentschrift 527 075 bekannte Bohrvorrichtung verwendet als Antrieb eine Schubeinheit, die mit einem Gestänge in Antriebsverbindung steht, das mit Bohrungen zum Einstecken von Stiften versehen ist, an denen Kupplungsmittel der Schubeinheit angreifen.

Bei einer aus der deutschen Patentschrift 317 300 bekannten Kupplung zwischen einem Bohrkopf und einem Bohrerschaft greift ein Querstift am Bohrer in ein Langloch am Bohrerschaft ein und bildet gleichzeitig eine Schwenkachse, um die der Bohrerschaft in eine fluchtende Lage mit dem Bohrer gebracht und dann durch axiales Verschieben verriegelt wird. Dabei greift ein Ansatz am Bohrer in einen U-förmigen Schlitz am Bohrerschaft.

Bei einer aus der deutschen Patentschrift 717 535 bekannten Kupplung zwischen einem Gestänge und einem Bohrkopf besitzt die eine Kupplungshälfte einen Zapfen mit zwei einander gegenüberliegenden Nasen, die so bemessen sind, daß sich bei winkliger Anordnung von Bohrkopf und Gestänge zunächst die eine Nase in eine Querbohrung am Bohrkopf und nach einem Verschwenken in eine fluchtende Lage die andere Nase in eine gegenüberliegende Querbohrung am Bohrkopf einführen läßt.

Weiterhin ist aus der deutschen Patentschrift 474 493 eine Bohrvorrichtung mit einem Gestänge aus U-Eisen oder Doppel-T-Eisen bekannt, die einseitig über Scharniere gelenkig miteinander verbunden sind, um mit Hilfe einer Hubvorrichtung ein Hochbohren auf einer Kurvenbahn zu ermöglichen.

Schließlich beschreibt die US-Patentschrift 4 062 412 eine Bohrvorrichtung mit einem Dreh-Schub-Antrieb und einem Gestänge aus einzelnen Abschnitten, die lose ineinander gesteckt sind, um ein Kurvenbohren zu ermöglichen. Der Vortrieb geschieht mit einem Schubantrieb, der das Gestänge schrittweise vorwärts bewegt. Dazu greifen während des Vorwärtshubs Schwenklaschen des Antriebs in Ausnehmungen des Gestänges. Beim Rückwärtshub verlassen die Schwenklaschen die Ausnehmungen wieder.

Von diesem Stand der Technik ausgehend, liegt der Erfindung das Problem zugrunde, eine Vorrichtung der eingangs erwähnten Art dahingehend zu verbessern, daß sie sowohl zum Schieben als auch zum Ziehen eines Gestänges geeignet ist und Verschleiß infolge Durchrutschens der Schub-Zug-Einheit an dem Gestänge vermeidet.

Als Lösung dieses Problems schlägt die Erfindung eine Bohrvorrichtung der eingangs erwähnten Art mit einer Schub-Zug-Einheit, einem damit in Antriebsverbindung stehenden Gestänge mit Vorsprüngen und/oder Ausnehmungen und an den Vorsprüngen oder den Ausnehmungen abwechselnd angreifenden formschlüssigen Kupplungsmitteln in Gestalt einer quer zum Gestänge verschiebbaren, das Gestänge entgegen der Vortriebsrichtung arretierenden Sperrklinke und einer von der Schub-Zug-Einheit linear angetriebenen Schubklinke vor, die erfindungsgemäß quer zum Gestänge bzw. Vortriebsrichtung verschiebbar angeordnet ist.

Das Gestänge kann als Zahnstange oder leiterartig mit Sprossen ausgebildet sein oder Ring- oder Spiralnuten aufweisen. Die Kupplungsmittel können aus wenigstens einem in eine Zahnstange oder Ring- bzw. Spiralnuten eingreifenden oder an den Sprossen oder Vorsprünge angreifenden Rastelemente bestehen.

Das Gestänge kann aus einzelnen Stangenteilen zusammengesetzt oder als Gelenkkette ausgebildet sein. Die Kupplungsmittel bestehen aus an wenigstens einem Vorsprung an- oder in eine Ausnehmung eingreifenden, durch die Schub-Zug-Einheit linear angetriebenen ein- und ausrastbaren Rastelementen, so daß sich das Gestänge schrittweise bewegen läßt.

Um das Gestänge bzw. die Gelenkkette mittels der Schub-Zug-Einheit sowohl schiebend als auch ziehend bewegen zu können, kann das Gestänge aus miteinander formschlüssig und schubsteif kuppelbaren Stangenteilen bestehen bzw. die Gelenkkette zuggelenkig und schubsteif ausgebildet sein.

Besteht das Gestänge aus einzelnen, zusammengesetzten Stangenteilen ist es vorteilhaft, wenn diese an einem Ende eine durch Querwände begrenzte Queröffnung und am anderen Ende einen Kupplungskopf mit einer die Queröffnung eines zu kuppelnden Stangenteils durchgreifenden und eine Querwand untergreifenden Nase, eine die andere Querwand übergreifende Ausnehmung und eine die andere Querwand bei Schubwirkung außenseitig untergreifenden Nase aufweisen.

Mittels eines solchen Schnellkupplungskopfs lassen sich die einzelnen Stangenteile, wenn sie weit genug in das Erdreich hineingedrückt bzw. aus dem Erdreich herausgezogen sind, miteinander kuppeln bzw. entkuppeln, ohne daß dies einen großen Zeit- bzw. Arbeitsaufwand erfordert und die Vorschubarbeit längerfristig unterbricht.

Vorzugsweise weisen die Querwände an sie untergreifende Nasen angepaßte Ausschnitte auf.

Wenn die Stangenteile leiterartig ausgebildet sind, kann die Queröffnung zwischen der letzten und der vorletzten, die Querwände bildenden Sprosse liegen und können die Sprossen die Ausschnitte für die Nasen aufweisen. Wenn andererseits die Stangenteile massiv mit wenigstens einseitigen, regelmäßig beabstandeten Ausnehmungen für die Kupplungsmittel ausgebildet sind, läßt sich die Queröffnung am einen Ende eines Stangenteils anordnen, während sich am anderen Ende ein Kupplungskopf befindet.

Eine andere Art, die Stangenteile miteinander zu verbinden, kann vorteilhafterweise darin bestehen, daß die Stangenteile an jedem Ende einen komplementären Bajonettkupplungskopf aus einer etwa der halben Breite des Stangenteils entsprechenden Längslasche mit einer Ausnehmung am vorderen, äußeren Ende der Lasche und einer komplementären Nase an dem Stangenteil, parallel zur Lasche und mit einem Erdzapfen an der Längslasche des einen Stangenteils sowie einer komplementären Querbohrung in der Längslasche des anderen Stangenteils aufweisen. Die Bohrungen sind so bemessen, daß sich der Querzapfen eines Stangenteils in die Querbohrung in einer abgewinkelten Stellung der beiden Stangenteile ineinander stecken lassen und in einer gestreckten, fluchtenden Stellung durch die in die Ausnehmungen greifenden Nasen verriegelt sind.

Auf diese Weise läßt sich immer, wenn ein Stangenteil weit genug in eine Bohrung oder eine Rohrleitung eingeschoben ist, ein angewinkeltes zweites Stangenteil ansetzen und durch Herumschwingen in die gestreckte, mit den anderen Stangenteilen fluchtende Lage verriegeln. Beim Ziehen des Gestänges läßt sich analog vorgehen, indem jeweils ein weit genug gezogenes Stangenteil durch Abwinkeln aus der Verriegelung mit den übrigen Stangenteilen gelöst wird.

Wenn der Querzapfen in der Querbohrung in Richtung der Längsachse der Stangenteile verschiebbar ist, können die Bajonettkupplungsköpfe bei Schubwirkung so ineinander greifen, daß die Stangenteile formschlüssig und schubsteif miteinander gekuppelt sind.

Wenn das Rastelement aus wenigstens einer querbeweglichen, in Antriebsrichtung die Schub-Zug-Einheit mit den Stangenteilen oder der Gelenkkette kuppelnden Sperrklinke besteht, muß die linear bewegliche Schub-Zug-Einheit nach dem Arbeitshub einen Rückhub durchführen, dabei soll jedoch das Gestänge nicht bewegt werden. Es ist dann vorteilhaft, wenn an einem nicht beweglichen Teil der Schub-Zug-Einheit eine querbewegliche, dieses Teil entgegengesetzt zur Antriebsrichtung mit den Stangenteilen oder der Gelenkkette kuppelnde oder klemmende Sperrklinke angeordnet ist.

Die Erfindung wird nachstehend anhand mehrerer in der Zeichnung dargestellter Ausführungsbeispiele des näheren erläutert. In der Zeichnung zeigen:
- Fig. 1: eine Vorrichtung aus einer Schub-Zug-Einheit und einem damit in Antriebsverbindung stehenden Gestänge beim Herstellen einer Erdbohrung,
- Fig. 2: eine detaillierte Seitenansicht einer Schub-Zug-Einheit sowie die damit in Antriebsverbindung stehenden Stangenteile,
- Fig. 3: eine Vorrichtung aus einer Schub-Zug-Einheit und einem damit in Antriebsverbindung stehenden Gestänge beim Zertrümmern einer alten Rohrleitung,
- Fig. 4: die Stangenteile während des Kuppelvorganges,
- Fig. 5: eine Draufsicht von miteinander gekuppelten anderen Stangenteilen,
- Fig. 6: eine Seitenansicht der Stangenteile gemäß Fig. 5,
- Fig. 7: eine Draufsicht auf wiederum andere Stangenteile, bevor sie miteinander gekuppelt sind,
- Fig. 8: eine Seitenansicht der Stangenteile gemäß Fig. 7 während des Kuppelns,
- Fig. 9: die Stangenteile gemäß Fig. 7 im gekuppelten Zustand,
- Fig. 10: Stangenteile einer weiteren Ausführung im ungekuppelten Zustand und
- Fig. 11: die Stangenteile gemäß Fig. 10 im gekuppelten Zustand.

Mittels der erfindungsgemäßen Vorrichtung wird, ausgehend von einer Grube 3, eine Bohrung 2 in das Erdreich 1 getrieben. Zu diesem Zweck ist in der Grube 3 eine Schub-Zug-Einheit 4 angeordnet. Ihre stillstehende Lafette 5 stützt sich mittels einer Druckplatte 6 an einer Wand des Erdreichs 1 ab und wird mittels eines oder mehrerer Bodenanker 7 gehalten. An der Lafette 5 ist eine Hydraulik-Kolben-Zylinder-Einheit 8 angeordnet, die einen Schlitten 9 linear hin- und herverschieben kann. Führungsbolzenpaare 10 im Schlitten 9 dienen dazu, ein Stangenteil 15 eines Bohrgestänges zu führen. Weitere Stangenteile 14 sind mit den im Schlitten 9 gehaltenen Stangenteil 14 gekuppelt. Die Bohrung wird durch Eintreiben einer Bohrspitze 13 mittels des aus den Stangenteilen 14 bestehenden Gestänges in das Erdreich 1 hergestellt.

Die Stangenteile 14 sind leiterartig mit Sprossen 15 und Parallelholmen 18 ausgebildet.

Am einen Ende eines jeden Stangenteils 14 ist ein Kupplungskopf 19 angeordnet, der mit einer vorletzten Sprosse und einer letzten Sprosse 17 eines benachbarten Stangenteils 14 zusammenwirkt. Der Kupplungskopf 19 ist mit einer Ausnehmung 20 versehen, die die letzte Sprosse 17 übergreift. Eine Nase 21 am Kupplungskopf 19 greift in einen Ausschnitt 24 der vorletzten Sprosse 16 ein, während eine Nase 22 in einen Ausschnitt 25 in der letzten Sprosse 17 eingreift.

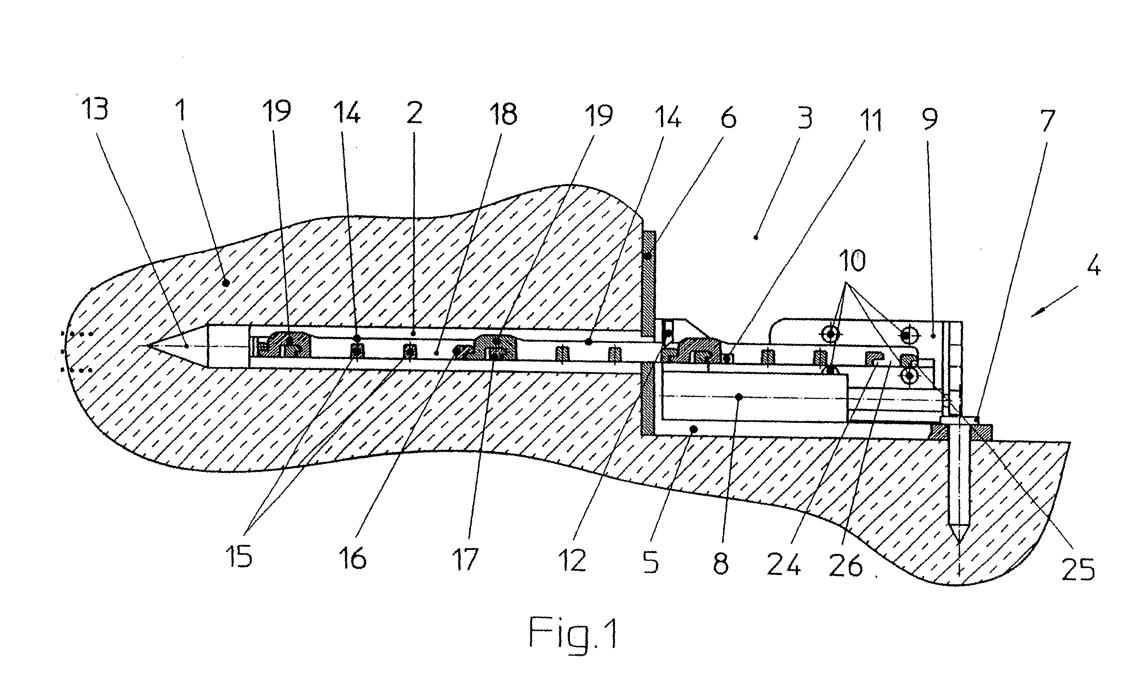

Soll, wie in Fig. 1 dargestellt, eine Erdbohrung 2 durch Einpressen des aus den Stangenteilen 14 bestehenden Gestänges mit der Bohrspitze 13 in das Erdreich 1 erzeugt werden, wird eine mit dem Schlitten 9 verbundene Schubklinke 11 so angeordnet, daß sie bei der Schubbewegung des Schlittens 9 hinter eine Sprosse 15 greift und auf diese Weise das aus den Stangenteilen 14 bestehende Gestänge in das Erdreich 1 treibt. Während dieser Schubbewegung legen sich die Nasen 21,22 so in die Ausschnitte 24,25, daß zwischen den Stangenteilen 14 eine schubsteife Verbindung gewährleistet ist.

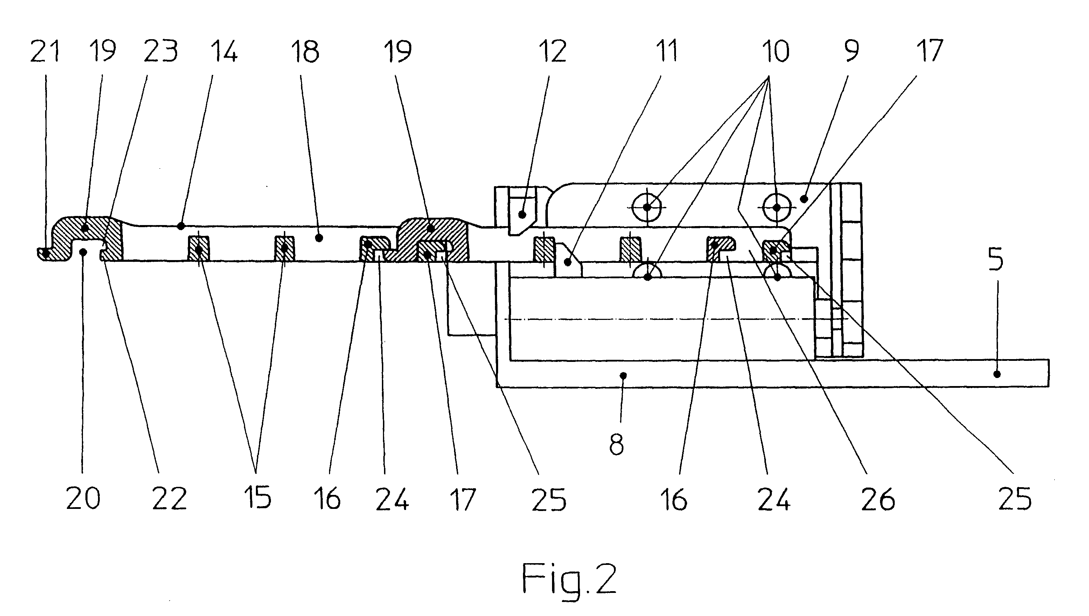

In Fig. 2 ist die Schub-Zug-Einheit 4 am Ende ihres Vorschubhubes dargestellt. Wird der Schlitten 9 mittels der Hydraulik-Kolben-Zylinder-Einheit 8 in die in Fig. 1 dargestellte Lage zurückgefahren, verhindert eine an der Lafette der Schub-Zug-Einheit 4 angeordnete Sperrklinke 12, daß sich das aus den Stangenteilen 14 bestehende Gestänge mit der Lafette 5 rückwärts bewegt.

Die Klinken 11,12 können federelastisch in der in Fig. 1 und 2 dargestellten Lage gehalten sein, so daß sie sich nur, wenn sich eine Sprosse 15,16,17 oder ein Kupplungskopf 19 an ihnen vorbeibewegt, zurückschieben lassen, um danach die dargestellte Lage wieder einzunehmen. Ebenso ist es möglich, die Klinken 11,12 mechanisch, elektrisch oder hydraulisch zu betätigen.

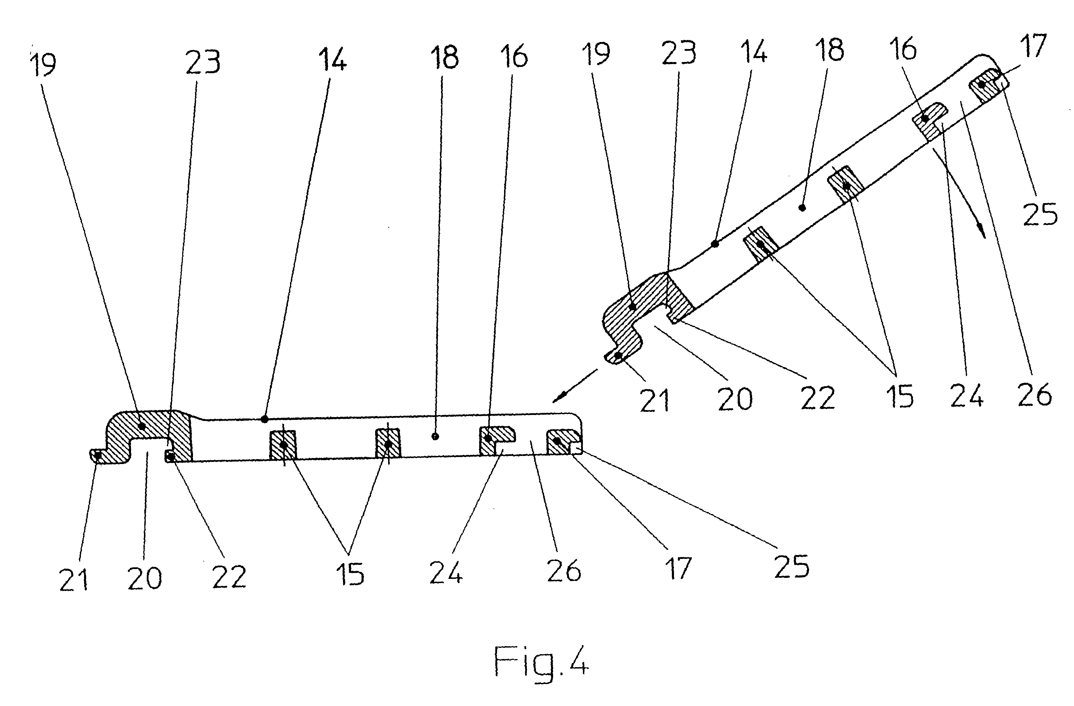

Wenn ein Stangenteil 14 so weit in die Erdbohrung 2 hineingepreßt ist, daß sich die vorletzte Sprosse 16 etwa in der in Fig. 1 dargestellten Lage kurz vor der Druckplatte 6 befindet, werden die oberen Führungsbolzen 10 aus der Lafette 9 herausgezogen, und ein weiteres Stangenteil 14 wird, wie in Fig. 4 dargestellt, mit dem vorhergehenden Stangenteil 14 gekuppelt. Dies wird dadurch bewerkstelligt, daß das anzukuppelnde Stangenteil 14 mit der Nase 21 seines Kupplungskopfes 19 in abgewinkelter Lage durch die Queröffnung 26 zwischen der vorletzten Sprosse 16 und der letzten Sprosse 17 geführt und dann in die in Fig. 1,2 dargestellte Lage, fluchtend mit den vorhergehenden Stangenteilen 14, geschwenkt wird. Danach werden die oberen Führungsbolzen 10 wieder in den Schlitten 9 eingesetzt, und der Vorschub mittels der Schub-Zug-Einheit 4 wird erneut schrittweise durchgeführt, bis auch dieses Stangenteil 14 wieder fast in der Erdbohrung 2 verschwunden ist.

Infolge des auf das jeweils letzte Stangenteil 14 wirkenden Schubs schieben sich die Nasen 21,22 in die Ausschnitte 24,25 in der vorletzten und der letzten Sprosse 16,17; sie gewährleisten so eine schubsteife Kupplung zwischen den Stangenteilen 14.

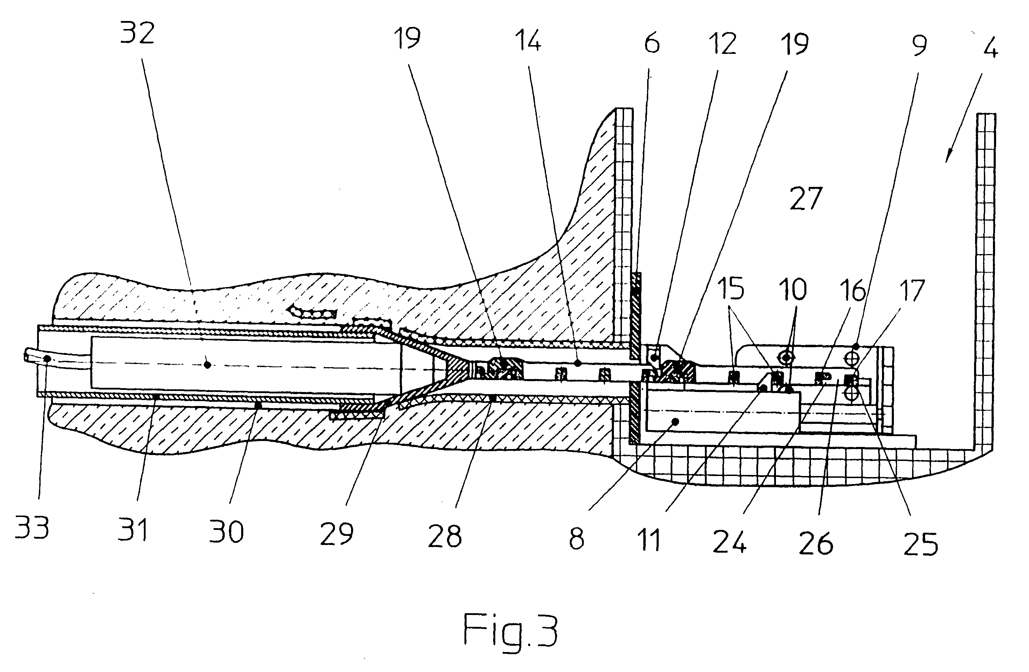

Um, wie in Fig. 3 dargestellt, eine alte Rohrleitung 28 durch eine neue Rohrleitung 31 zu ersetzen, werden zunächst nach und nach miteinander zu einem Gestänge gekuppelte Stangenteile 14 von einem Kanalschacht 27 aus durch die alte Rohrleitung 28 bis zu einem benachbarten, nicht dargestellten Kanalschacht geschoben. Hierauf wird ein Berstkopf 29 mit dem Kupplungskopf 19 des letzten Stangenteils 14 gekuppelt, während das Stangenteil 14, das sich im Kanalschacht 27 im Bereich der Schub-Zug-Einheit 4 befindet, durch die Hydraulik-Kolben-Zylinder-Einheit 8, die ein Verschieben des Schlittens bewirkt, in den Kanalschacht 27 gezogen wird. Auf diese Weise wird mittels des Berstkopfes 29 die alte Rohrleitung 28 zertrümmert; gleichzeitig wird eine erweiterte Erdbohrung 30 erstellt und ein mit dem Berstkopf 29 verbundenes Nachziehrohr 31, das die neue Rohrleitung darstellt, in die Erdbohrung 30 eingezogen.

Um ein Ziehen des aus den Stangenteilen 14 bestehenden Gestänges zu ermöglichen, sind die Klinken 11,12 gegenüber der Darstellung in Fig. 1 um 180° gedreht angeordnet.

Um das Zertrümmern der alten Rohrleitung 28 zu unterstützen, kann in dem Berstkopf 29 ein druckmittelgetriebenes Rammbohrgerät 32 angeordnet sein, dem Druckmedium über eine Druckmedienleitung 33 im Nachziehrohr 31 zugeführt wird. Die Schläge des Rammbohrgeräts 32 bewirken ein schnelles Zertrümmern der alten Rohrleitung 28.

Anstelle des Rammbohrgeräts 32 oder im Zusammenwirken mit ihm können am Berstkopf 29 aufstellbare Schneiden angeordnet sein, die durch eine Radialbewegung örtlich verstärkte, hohe Kräfte auf die alte Rohrleitung 28 aufbringen und diese aufreißen.

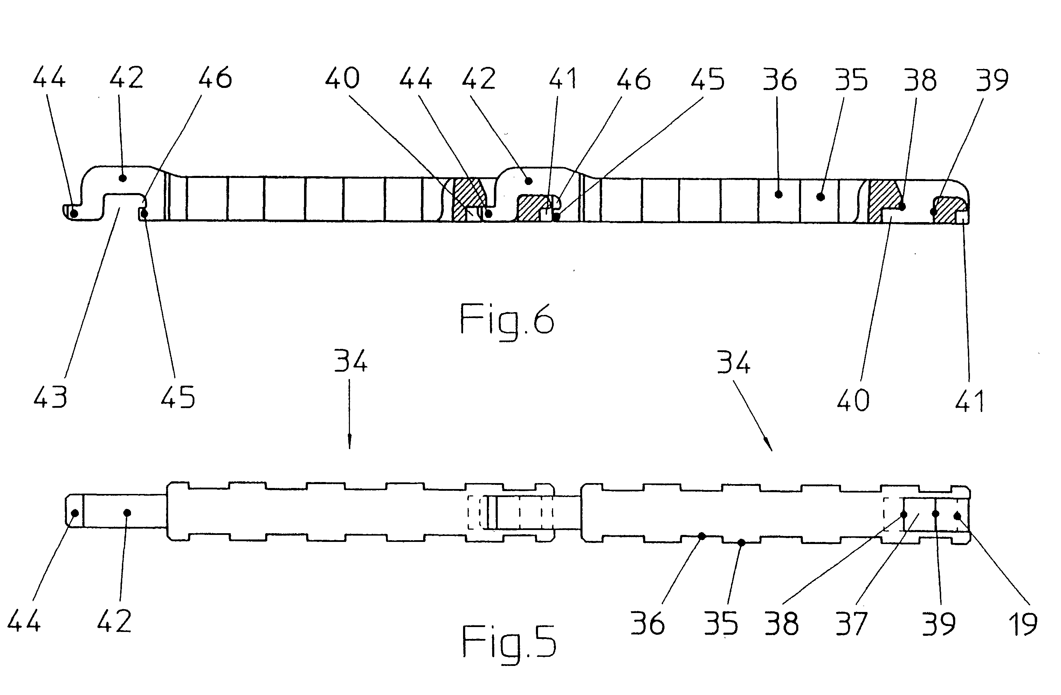

In Fig. 5 und 6 sind Stangenteile 34 dargestellt, die nicht leiterartig, sondern massiv ausgebildet sind und seitliche Vorsprünge 35 besitzen, in die Sperrklinken, ähnlich wie die Klinken 11,12 gemäß Fig. 1 bis 4, für den Vorschub eingreifen können.

Am einen Ende eines jeden Stangenteils 34 ist ein Kupplungskopf 42 angeordnet, der mit einer Ausnehmung 43 sowie Nasen 44,45 versehen ist, während sich am anderen Ende eine Queröffnung 37 befindet, die von Querwänden 38,39 begrenzt ist, so daß sich der Kupplungskopf 42 durch diese Queröffnung 37 zum Kuppeln mit einem weiteren Stangenteil 34 einschwenken läßt.

Die Nasen 44,45 greifen dann in die Ausschnitte 40,41 ein, so daß auch bei dieser Ausführung eine schubsteife Kupplung gewährleistet ist.

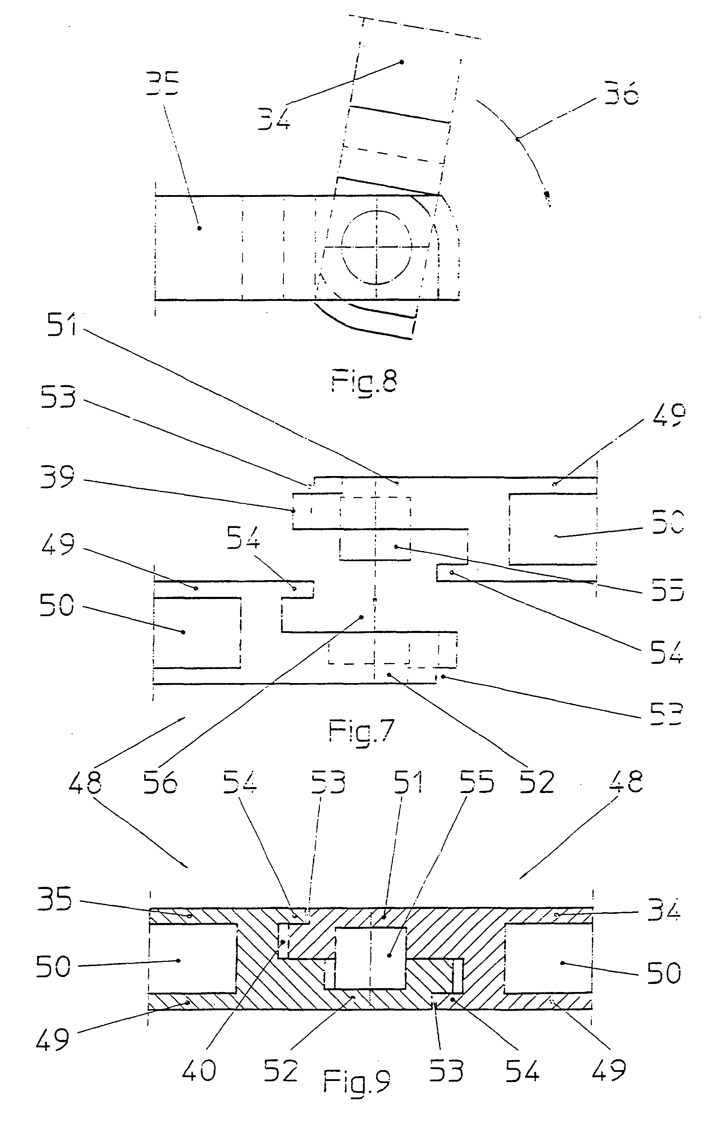

In Fig. 7 bis 9 ist eine weitere Ausführung einer schubsteifen Kupplung zwischen Stängenteilen 48 dargestellt. Diese Stangenteile sind leiterartig ausgebildet; jedoch sind nur die parallelen Längsholme sowie ein Bajonettkupplungsköpfen 51,52 benachbarter Ausschnitt 50 dargestellt. Der Bajonettkupplungskopf 51 ist als in Längsrichtung des Stangenteils 48 verlaufende Lasche ausgebildet, die eine Dicke von etwa der halben Breite des Stangenteils 48 besitzt. Das Ende des Bajonettkupplungskopfes 51 ist mit einer Ausnehmung 53 versehen, die mit einer komplementären Nase 54 am Stangenteil 48 zusammenwirkt. Der Bajonettkupplungskopf 51 besitzt einen Querzapfen 55, der mit einer Querbohrung 56 am Bajonettkupplungskopf 52 zusammenwirkt.

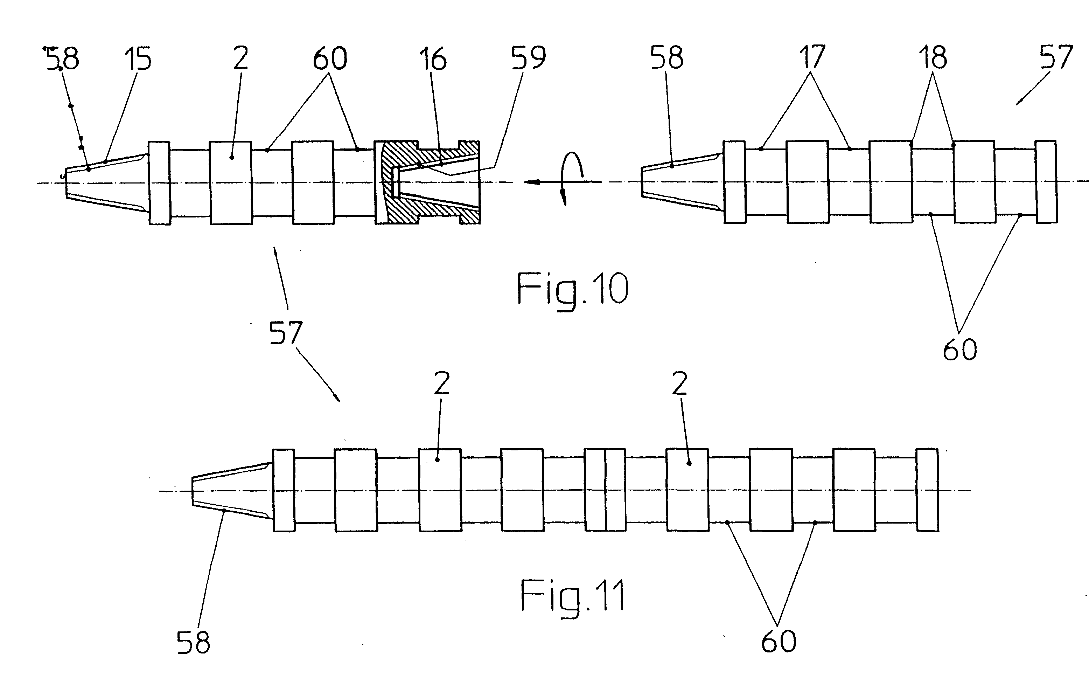

Aus Fig. 7 ist ersichtlich, daß die Bajonettkupplungsköpfe 51,52 komplementär ausgebildet sind, so daß sich in der in Fig. 8 dargestellten Lage der Querzapfen 55 in die Querbohrung 56 einstecken und sich die Stangenteile 48 durch Schwenken in die gestreckte, d.h. fluchtende Lage bringen und dort verriegeln lassen.

Wenn die Querbohrung 56 als Langloch ausgebildet ist, kann bei Schubeinwirkung auf die Stangenteile 48 eine geringfügige relative Verschiebung eintreten, welche die senkrechten Flächen der Bajonettkupplungsköpfe 51,52 aneinander zur Anlage bringt, so daß die Stangenteile 48 schubsteif miteinander verbunden sind.

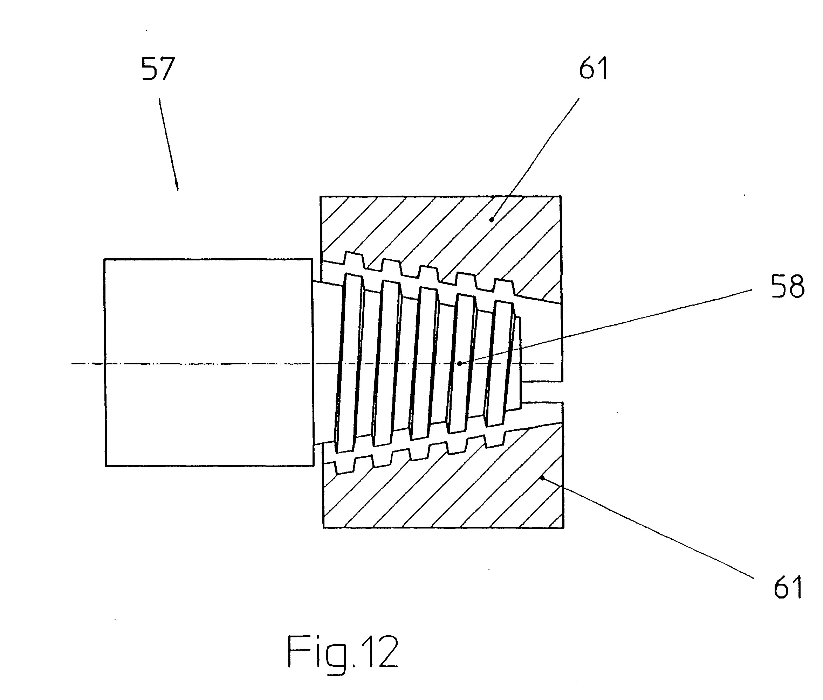

Die Fig. 10 und 11 zeigen Stangenteile 57, die einen runden oder quadratischen Querschnitt besitzen und am einen Ende mit einem konischen Außengewinde 58 sowie am anderen Ende mit einer Bohrung 59 mit konischem Innengewinde versehen sind. Die Stangenteile 57 lassen sich somit auf einfache Weise miteinander verschrauben und bilden auf diese Weise ein schubsteifes Gestänge. Die Kupplungsmittel der Schub-Zug-Einheit können in als Ringnuten ausgebildete Ausnehmungen 60 eingreifen. Anstelle der Ringnuten können auf der Außenoberfläche der Stangenteile 57 auch Spiralnuten angeordnet sein.

Wenn das Gestänge nicht aus einzelnen Stangenteilen, sondern aus einer Gliederkette besteht, läßt sich die Gliederkette von einer Trommel in der Grube 3 oder im Schacht 27 oder außerhalb derselben abwickeln oder darauf aufwickeln, ohne daß Arbeitsunterbrechungen wegen des Ansetzens von Stangenteilen erforderlich sind. Der Vorschub läßt sich bei einer Gliederkette sowohl durch einen Linearantrieb als auch durch einen Drehantrieb bewerkstelligen. Eine schubsteife Kupplung zwischen den einzelnen Kettengliedern läßt sich dabei dann erreichen, wenn in den Gelenken der Kettenglieder eine axiale Bewegungsmöglichkeit besteht, so daß sich komplementär geformte Flächen benachbarter Kettenglieder beim Einwirken einer Schubkraft aneinanderlegen und eine schubsteife Kupplung bewirken.

## Patentansprüche

1. Vorrichtung zum Bohren im Erdreich mit einer Schub-Zug-Einheit (4) einem damit in Antriebsverbindung stehenden Gestänge (14, 34, 48, 57), Vorsprüngen (15, 35) und/oder Ausnehmungen (36, 60) am Gestänge (14, 34, 48, 57) und an den Vorsprüngen (15, 35) oder den Ausnehmungen (36, 60) abwechselnd angreifenden formschlüssigen Kupplungsmitteln (11, 12) in Gestalt einer quer zum Gestänge verschiebbaren, das Gestänge entgegen der Vortriebsrichtung arretierenden Sperrklinke (12) und einer von der Schub-Zug-Einheit linear angetriebenen Schubklinke (11), **dadurch gekennzeichnet, daß** die Schubklinke quer zum Gestänge verschiebbar angeordnet ist.

2. Vorrichtung nach Anspruch 1, **dadurch gekennzeichnet, daß** das Gestänge (14) als Zahnstange ausgebildet ist.

3. Vorrichtung nach Anspruch 1, **dadurch gekennzeichnet, daß** das Gestänge (14) leiterartig ausgebildet ist.

4. Vorrichtung nach Anspruch 1, **dadurch gekennzeichnet, daß** das Gestänge (14) Ring- oder Spiralnuten (60) aufweist.

5. Vorrichtung nach Anspruch 1, **dadurch gekennzeichnet, daß** das Gestänge (14) als Gelenkkette ausgebildet ist.

6. Vorrichtung nach einem der Ansprüche 1 bis 4, **dadurch gekennzeichnet, daß** das Gestänge (57) wenigstens an seinem mit der Schub- und Zugeinheit (4) formschlüssig kuppelbaren Ende ein Gewinde (58, 59) aufweist.

7. Vorrichtung nach einem der Ansprüche 2, 3 und 4, **dadurch gekennzeichnet, daß** das Gestänge (14) aus miteinander formschlüssig und schubsteif kuppelbaren Stangenteilen (14, 34, 48, 57) besteht.

8. Vorrichtung nach Anspruch 5, **gekennzeichnet durch** eine zuggelenkige und schubsteife Gelenkkette.

9. Vorrichtung nach Anspruch 7, **dadurch gekennzeichnet, daß** die Stangenteile (14, 34) am einen Ende eine durch Querwände (16, 17; 38, 39) begrenzte Queröffnung (26; 37) und am anderen Ende einen Kupplungskopf (19; 42) mit einer die Queröffnung (26; 37) eines zu kuppelnden Stangenteils (14, 34) durchgreifenden und eine Querwand (16, 38) untergreifenden Nase (21, 44), einer die andere Querwand (17, 39) übergreifenden Ausnehmung (20, 43) und einer die andere Querwand (17, 39) bei Schubwirkung außenseitig untergreifenden Nase (22, 45) aufweisen.

10. Vorrichtung nach Anspruch 9, **dadurch gekennzeichnet, daß** die Querwände (16, 17; 38, 39) den sie untergreifenden Nasen (21, 22; 44, 45) angepaßte Ausschnitte (24, 25; 40, 41) besitzen.

11. Vorrichtung nach Anspruch 9 oder 10, **dadurch gekennzeichnet, daß** die Stangenteile (14) leiterartig ausgebildet sind, die Queröffnung (26) zwischen der letzten und der vorletzten, die Querwände bildende Sprosse (16, 17) liegt und die Sprossen (16, 17) die Ausschnitte (16, 17, 24, 25) für die Nasen (21, 22) aufweisen.

12. Vorrichtung nach Anspruch 9 oder 10, **dadurch gekennzeichnet, daß** die Stangenteile (34) massiv mit wenigstens einseitigen, regelmäßig beabstandeten Ausnehmungen (36) für die Kupplungsmittel (11) ausgebildet sind.

13. Vorrichtung nach Anspruch 7, **dadurch gekennzeichnet, daß** die Stangenteile (48) an jedem Ende einen komplementären Bajonettkupplungskopf (51, 52) aus einer etwa der halben Breite des Stangenteils (48) entsprechenden Längslasche mit einer Ausnehmung (53) am vorderen, äußeren Ende der Lasche, einer komplementären Nase (54) an dem Stangenteil (48), parallel zur Lasche aufweisen mit einem Querzapfen (55) an der Längslasche des einen Stangenteilendes sowie einer komplementären Querbohrung (56) an der Längslasche des anderen Stangenteilendes versehen sind, die so bemessen sind, daß sich der Querzapfen (55) eines Stangenteils (48) in die Querbohrung (56) in einer abgewinkelten Lage der beiden Stangenteile (48) ineinanderstecken lassen und in einer gestreckten, fluchtenden Lage durch die in die Ausnehmungen (53) greifenden Nasen (54) verriegelt sind.

14. Vorrichtung nach Anspruch 13, **dadurch gekennzeichnet, daß** der Querzapfen (55) in der Querbohrung (56) in Richtung der Längsachse der Stangenteile (48) verschiebbar ist und bei Schubeinwirkung die Bajonettkupplungsköpfe (51, 52) so ineinander greifen, daß die Stangenteile (48) formschlüssig und schubsteif miteinander gekuppelt sind.

15. Vorrichtung nach einem der Ansprüche 1 bis 14, **dadurch gekennzeichnet, daß** an einem nicht beweglichen Teil (5) der Schub-Zug-Einheit (4) eine querbeweglich dieses Teil (5) entgegengesetzt zur Antriebsrichtung mit den Stangenteilen (14, 34, 48) oder der Gelenkkette kuppelnde oder klemmende Sperrklinke (12) angeordnet ist.

## Claims

1. Device for drilling in the ground, having a push-pull unit (4), a rod assembly (14, 34, 48, 57) in driving connection with said push-pull unit, projections (15, 35) and/or recesses (36, 60) on the rod assembly (14, 34, 48, 57) and, alternately engaging on the projections (15, 35) or the recesses (36, 60), form-fitting coupling means (11, 12) in the form of a blocking ratchet (12) displaceable transverse to the rod assembly, arresting the rod assembly against the driving direction and a push ratchet (11) driven in linear fashion by the push-pull unit, **characterised in that** the push ratchet is arranged displaceable transverse to the rod assembly.

2. Device according to Claim 1, **characterised in that** the rod assembly (14) is designed as a toothed rod.

3. Device according to Claim 1, **characterised in that** the rod assembly (14) is designed with a ladder-like form.

4. Device according to Claim 1, **characterised in that** the rod assembly (14) has circular or helical grooves (60).

5. Device according to Claim 1, **characterised in that** the rod assembly (14) is designed as a link chain.

6. Device according to one of the claims 1 to 4, **characterised in that** the rod assembly (57) has a thread (58, 59) on its end couplable in form-fitting manner to the push-pull unit (4).

7. Device according to one of the claims 2, 3 or 4, **characterised in that** the rod assembly (14) comprises rod members (14, 34, 48, 57) couplable with each other in form-fitting manner and so as to be rigid on pushing.

8. Device according to Claim 5, **characterised in that** it has a link chain which articulates on pulling, but is rigid on pushing.

9. Device according to Claim 7, **characterised in that** the rod members (14, 34) have at one end a transverse opening (26; 37) bordered by transverse walls (16, 17; 38, 39) and at the other end, a coupling head (19; 42) with a nose (21, 44) engaging through the transverse opening (26; 37) of a rod member (14, 34) to be coupled and engaging under a transverse wall (16, 38), a recess (20, 43) engaging over the other transverse wall (17, 39) and a nose (22, 45) engaging under the other transverse wall (17, 39) externally during a pushing action.

10. Device according to Claim 9, **characterised in that** the transverse walls (16, 17; 38, 39) have recesses (24, 25; 40, 41) adapted to the noses (21, 22; 44, 45) engaging under them.

11. Device according to Claim 9 or 10, **characterised in that** the rod members (14) are designed with a ladder-like form, that the transverse opening (26) lies between the ultimate and penultimate rungs (16, 17) comprising the transverse walls, and that the rungs (16, 17) have the recesses (16, 17, 24, 25) for the noses (21, 22).

12. Device according to Claim 9 or 10, **characterised in that** the rod members (34) are designed solid with regularly spaced recesses (36) at least on one side for the coupling means (11).

13. Device according to Claim 7, **characterised in that** the rod members (48) have at each end a complementary bayonet coupling head (51, 52) comprising a longitudinal plate representing approximately half the width of the rod member (48), with a recess (53) at the front, external end of the plate, a complementary nose (54) on the rod member (48), parallel to the plate and are provided with a transverse spigot (55) on the longitudinal plate of one rod member end and with a complementary transverse bore (56) on the longitudinal plate of the other rod member, so dimensioned that the transverse spigot (55) of one rod member (48) may be inserted into the transverse bore (56) in a tilted position of the two rod members (48) and that in a straight, aligned position they are locked by the noses (54) engaging in the recesses (53).

14. Device according to Claim 13, **characterised in that** the transverse spigot (55) is displaceable in the transverse bore (56) in the direction of the longitudinal axis of the rod members (48) and during a pushing action, the bayonet coupling heads (51, 52) engage with each other such that the rod members (48) are coupled to each other in form-fitting manner and so as to be rigid on pushing.

15. Device according to one of the claims 1 to 14, **characterised in that** arranged on a non-moving part (5) of the push-pull unit (4) is a transversely movable blocking ratchet (12) coupling or locking this part (5) to the rod members (14, 34, 48) or the link chain in opposition to the driving direction.

## Revendications

1. Dispositif pour forer le sol comprenant une unité de poussée et de traction (4), une tringlerie (14, 34, 48, 57) qui est en liaison d'entraînement avec cette dernière, des saillies (15, 35) et/ou des évidements (36, 60) sur la tringlerie (14, 34, 48, 57) et des moyens d'accouplement (11, 12) par engagement positif agissant tantôt sur les saillies (15, 35), tantôt sur les évidements (36, 60), qui se présentent sous la forma d'un cliquet d'arrêt (12) mobile transversalement à la tringlerie et arrêtant la tringlerie pour l'empêcher de progresser dans le sens d'avancement, et d'un loquet de poussée (11) entraîné de façon linéaire par l'unité de poussée et de traction, **caractérisé en ce que** le loquet de poussée est disposé de façon à être mobile transversalement à la tringlerie.

2. Dispositif selon la revendication 1, **caractérisé en ce que** la tringlerie (14) est réalisée en tant que crémaillère.

3. Dispositif selon la revendication 1, **caractérisé en ce que** la tringlerie (14) est réalisée à la manière d'une échelle.

4. Dispositif selon la revendication 1, **caractérisé en ce que** la tringlerie (14) présente des rainures annulaires ou en spirale (60).

5. dispositif selon la revendication 1, **caractérisé en ce que** la tringlerie (14) est réalisée en tant que chaîne à articulations.

6. Dispositif selon l'une des revendications 1 à 4, **caractérisé en ce que** la tringlerie (57) présente un filetage (58, 59) au moins à son extrémité pouvant être accouplée par engagement positif à l'unité de poussée et de traction (4).

7. Dispositif selon l'une des revendications 2, 3 et 4, **caractérisé en ce que** la tringlerie (14) est composée de segments de barre (14, 34, 48, 57) pouvant être accouplés entre eux par engagement positif et de façon rigide à la poussée.

8. Dispositif selon la revendication 5, **caractérisé par** une chaîne à articulations articulée à la traction et rigide à la poussée.

9. Dispositif selon la revendication 7, **caractérisé en ce que** les segments de barre (14, 34) présentent à une extrémité une ouverture transversale (26 ; 37) délimitée par des parois transversales (16, 17 ; 38, 39), et à l'autre extrémité une tête d'accouplement (19 ; 42) dotée d'une saillie (21, 44) traversant l'ouverture transversale (26 ; 37) d'un segment de barre (14, 34) à accoupler et s'enclenchant sous une paroi transversale (16, 38), un évidement (20, 43) s'enclenchant par-dessus l'autr paroi transversale (17, 39) et une saillie (22, 45) s'enclenchant à l'extérieur sous l'autre paroi transversale (17, 39) lors dune poussée.

10. Dispositif selon la revendication 9, **caractérisé en ce que** les parois transversales (16, 17 ; 38, 39) possèdent des découpes (24, 25 ; 40, 41) adaptées aux saillies (21, 22 ; 44, 45) s'enclenchant sous elles.

11. Dispositif selon la revendication 9 ou 10, **caractérisé en ce que** les segments de barre (14) sont réalisés à la manière d'une échelle, **en ce que** l'ouverture transversale (26) est située entre le dernier et l'avant-dernier échelon (16, 17) forment les parois transversales, et **en ce que** les échelons (16, 17) présentent les découpes (16, 17, 24, 25) pour les saillies (21, 22).

12. Dispositif selon la revendication 9 ou 10, **caractérisé en ce que** les segments de barre (34) sont réalisés de façon massive et comportent au moins d'un côté des évidements (36) régulièrement espacés pour les moyens d'accouplement (11).

13. Dispositif selon la revendication 7, **caractérisé en ce que** les segments de barre (48) présentent à chaque extrémité une tête d'accouplement à baïonnette complémentaire (51, 52) constituée par une patte longitudinale, dont la largeur équivaut à la moitié de la largeur du segment de barre (48) et qui est munie d'un évidement (53) à l'extrémité avant extérieure de la patte et d'une saillie complémentaire (54) sur le segment de barre (48), parallèlement à la patte, la patte longitudinale de l'extrémité de l'un des segments de barre étant munie d'un tenon transversal (55) et la patte longitudinale de l'extrémité de l'autre segment de barra étant munie d'un perçage transversal (56), ces tenon transversal (55) et perçage transversal (56) étant dimensionnés de telle sorte que le tenon transversal (55) d'un segment de barre (48) se laisse emboîter dans le perçage transversal (56) alors que les deux segments de barre (48) sont disposés avec décalage angulaire et sont verrouillés par les saillies (54) s'encastrant dans les évidements (53) lorsque lesdits segments de barre sont situés dans le prolongement l'un de l'autre.

14. Dispositif selon la revendication 13, **caractérisé en ce que** le tenon transversal (55) est monté coulissant dans le perçage transversal (56) dans la direction de l'axe longitudinal des segments de barre (48), et **en ce que** sous l'effet d'une poussée, les têtes d'accouplement à baïonnette (51, 52) s'emboîtent de telle manière que les segments de barre (48) soient accouplés entre eux par engagement positif et de façon rigide à la poussée.

15. Dispositif selon l'une des revendications 1 à 14, **caractérisé en ce que** sur une partie (5) non mobile de l'unité de poussée et detraction (4) est monté un cliquet d'arrêt (12), mobile transversalement par rapport à cette partie (5), en sens contraire au sens d'entraînement, ce cliquet d'arrêt (12) accouplant ou bloquant les segments de barre (14, 34, 48) ou la chaîne à articulations.
